# EUROPÄISCHE PATENTSCHRIFT

(11) **EP 0 627 587 B1**
(45) Veröffentlichungstag und Bekanntmachung des Hinweises auf die Patenterteilung: **18.09.1996**
(21) Anmeldenummer: 94201545.4
(22) Anmeldetag: 31.05.1994
(51) Int. Cl.: F16L 3/12

(54) **Montagestütze zur Unterstützung und Führung einer Rohrleitung in einer Kurve**
Support assembly for supporting and guiding a curved pipe
Ensemble de support pour supporter et guider un tuyau courbé

(30) Priorität: 01.06.1993 NL 9300935
(43) Veröffentlichungstag der Anmeldung: 07.12.1994
(73) Patentinhaber: J. van Walraven B.V., NL-3641 RK Mijdrecht (NL)
(72) Erfinder: van Walraven, Jan, NL-3641 GP Mijdrecht (NL)
(74) Vertreter: Boelsma, Gerben Harm, Ir.

(56) Entgegenhaltungen:
- DE-U- 8 530 100
- DE-U- 8 632 274
- DE-U- 8 915 562

## Beschreibung

Die Erfindung bezieht sich auf eine Montagestütze zur Unterstützung und Führung einer Leitung in einer Kurve, bestehend aus einem zum Befestigen auf einem Untergrund ausgelegten und mit einem sich über etwa einen Viertel-Kreisbogen erstreckenden Stützrinnenteil versehenen Fuss.

Eine derartige Montagestütze ist aus der CH-669648 und dem GM-U-8530100 bekannt. Bei dieser bekannten Montagestütze wird die Leitung etwa in der Mitte des Kreisbogens der Stützrinne mittels eines um die Rinnenwandung greifenden Klemmbandes oder -ringes in ihrem Sitz festgelegt.

Aus dem Gm-U-8915562 ist eine andere Art von Montagestütze bekannt, bestehend aus einem hohl ausgeführten Bogenstück, das hauptsächlich durch zwei parallel zueinander verlaufende, etwa rechteckig-dreieckige Stützwände gebildet wird, welche an den "schrägen" Dreiecksseiten durch eine in Form eines Viertel-Kreisbogens gebogenen Führungswand miteinander verbunden sind. Dieses Bogenstück greift von der "Innenkurvenseite" her um die zu führende und zu unterstützende Leitung und wird mittels einer sich längs einer der Rechtecksseiten der rechteckigen Stützwände erstreckenden Fussplatte auf dem Untergrund befestigt.

Diese Montagestütze hat gegenüber derjenigen nach der CH-669648 und dem Gm-U-8530100 den Vorteil, dass die Leitung besser, und zwar über die ganze Länge des Viertel-Kreisbogens nach aussen abgedeckt und umschlossen wird. Ein Nachteil ist jedoch, dass das Bogenstück zunächst auf die Leitung aufgeschoben werden muss, bevor es auf dem Untergrund befestigt werden kann. Vor allem bei steifen Leitungen, die sich weniger leicht biegen lassen, kann dies zu Schwierigkeiten führen. Weiterhin können weniger leicht biegende Leitungen bei einer Montagestütze dieser Art leicht knicken, wobei der Leitungsquerschnitt an der Knickstelle reduziert wird.

Im Zusammenhang mit dem letzteren Umstand ist es in der Praksis bekannt, bei einer Montagestütze dieser Art eine Einlage anzubringen, bevor das Bogenstück auf dem Untergrund befestigt wird. In der Praksis wird das Anbringen der Einlage jedoch oft vergessen, ohne dass sich dies nachträglich leicht feststellen lässt.

Die Erfindung beabsichtigt nunmehr die obengenannten Nachteile der bekannten Montagestützeausführungen zu beheben.

Erfindungsgemäss wird dieser Zweck mit einer gattungsgemässen Montagestütze erreicht, welche sich kennzeichnet durch ein hohl ausgeführtes Bogensstück in der Gestalt von zwei parallel zueinander stehenden, etwa rechteckig-dreieckigen Stützwänden, die längs der schrägen Dreiecksseite durch eine am Stützrinnenteil komplementär geformte Führungswand miteinander verbunden sind und die ferner auch längs einer der Rechtecksseiten durch eine Verbindungswand miteinander verbunden sind, welche an einem Ende in Zusammemarbeitung mit der Führungswand eine ringsherum durch eine Wand umschlossene Durchtrittsöffnung für die Leitung begrenzt, welches Bogenstück lösbar, mit den freien Rechtecksseiten der beiden Stützwände bis zum Untergrund ragend, über den Fuss passt.

In einer bevorzugten Ausbildungsform ist am anderen Leitung-Durchtrittsende der Führungswand eine mit ihren drehbaren Hälften normal offen stehende Klemmschelle des unter Einfluss des Druckes der biegenden Leitung sich automatisch schliessenden Typs vorgesehen.

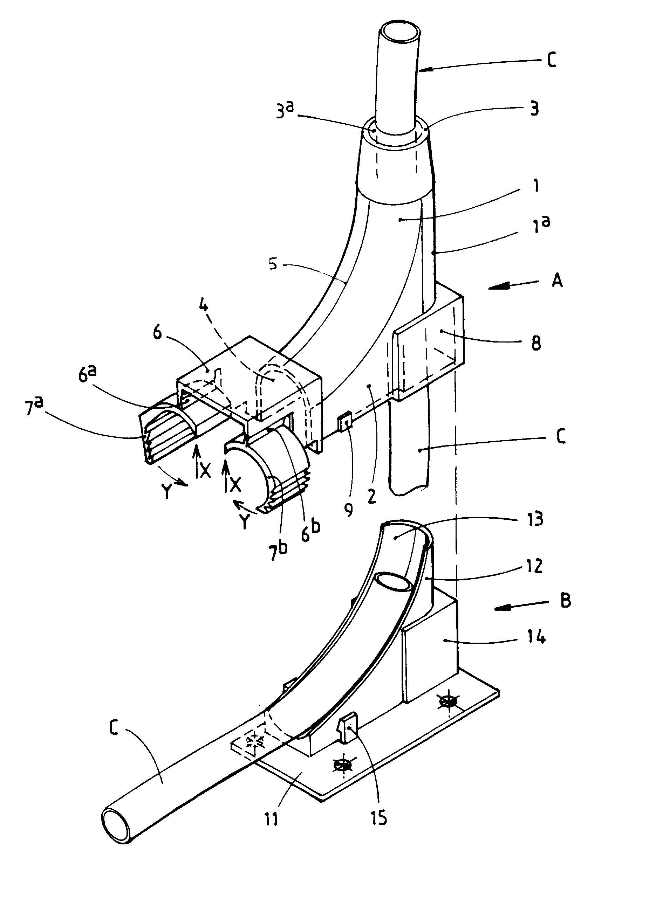

Die Erfindung wird unten anhand der Zeichnung mit einem Ausführungsbeispiel näher erlautert.

Die Zeichnung zeigt eine Perspektivansicht der erfindungsgemässen, aus zwei Teilen bestehenden Montagestütze, in demontiertem Zustand.

Die gezeigte Montagestütze besteht aus einem hohl ausgeführten Bogenstück A und einem Fuss B, welche als gesonderte Spritzformstücke aus einem geeigneten Kunststoff herstellen sind.

Das Bogenstück A hat ein hinten von einem zylindrischen Wandteil 1a begrenztes auf stehendes Bein 1 und ein an der unteren Seite offenes, liegendes Bein 2. Das aufstehende Bein läuft nach oben in eine Durchtrittsöffnung 3 für eine zu montierende Leitung C aus, welche Offnung von einem Stumpfkegeligen Ringteil 3a begrenzt wird. Dieser Ringteil hat eine nach innen abnehmende Wandstärke und ist also ziemlich biegsam, sodass er die Leitung C dichtend umschliessen kann.

Das liegende Bein 2 läuft an der vorderen Seite in eine an der offenen unteren Seite des Beines mündende Durchtrittsöffnung 4 aus. An der Obenseite und auf die beiden Seiten dieser Durchtrittsöffnung 4 erstreckt sich ein Teil 6 nach vorne, an welchem Teil mittels gelenkigen Verbindungsstreifen 6a und 6b die beiden Hälften 7a und 7b einer Leitungsschelle des selbst-schliessenden Typs befestigt sind.

Längs der oberen Seite des Bogenstückes erstreckt sich eine Innenkurve-Führungswand 5 zwischen den beiden Durchtrittsöffnungen 3 und 4.

Der Verbindungsteil 8 zwischen den beiden Beinen 1 und 2 ist zu einem, sowohl im wagerechtem Schnitt wie auch im senkrechten Schnitt rechteckigen Innenraum erweitert.

An der Aussenseite des Bogenstückes, in der nähe der unteren Ränder des liegenden Beines 2 sind Schnappvorsprünge 9 vorgesehen.

Die Fussplatte B hat einen auf einer Wand(boden) zu befestigenden, die eigentliche Fussplatte bildenden Plattenförmigen Teil 11 und einen von diesem aufstehenden Teil 12, der von unten her in das Bogenstück A hinein passt. Der aufstehende Teil 12 wird längs der oberen Seite von einer im Querschnitt kreisbogenförmig-konkav geformten Fläche 13 begrenzt, welche die Aussenkurve-Führungsfläche der Montagestütze bildet. Der hinter-untere Abschnitt 14 des aufstehenden Teils oder Aufsatzes 12 ist sowhol nach hinten, wie auch seitlich blockförmig verdickt und passt in dem rechteckigen Innenraum 8 des Bogenstückes A.

Wie aus der Zeichnung zu erkennen ist, läuft die von oben durch die Durchtrittsöffnung 3 aus dem noch los liegenden Bogenstück A tretende Leitung zunächts etwa gerade durch das Bogenstück hindurch nach unten, während die Klemmschellenhälften 7a, 7b eine aufgespreizte Lage einnehmen.

In dieser Situation wird das Bogenstück 8 in senkrechter richtung mit dem Fuss B zusammengebracht. Dabei wird die von unten aus dem Bogenstück A austretende Leitung C allmählich von der Aussenkurve-Führungsfläche 13 des Aufsatzes 12 bis zur gezeigten gebogenen Lage umgebogen. Dabei wird das Bogenstück A über den Fuss B geschoben und wird der Fuss mit seiner blockförmigen Verdickung im Innenraum 8 des Bogenstückes A verriegelt.

In der letzten Phase des Zusammenbringens des Bogenstückes und des Fusses stösst die Leitung C in der Pfeilrichtung X gegen die obenliegenden Enden der Klemmschellenhälften 7a, 7b, wodurch sich diese Klemmhälften in der Pfeilrichtung Y um die Leitung C schliessen. Die Klemmschellenhälften bewegen sich dabei über einander und zwar derart, dass die äussere Verzahnung der Klemmschellenhälfte 7b in Eingriff mit der inneren Verzahnung der Klemmschellenhälfte 7a gelangt.

Die seitlich vom Aufsatz 12 von der Fussplatte 11 aufstehenden Verriegelungsvorsprünge 15 greifen dabei um die oberen Ränder der Schnappvorsprünge 9 an beiden Seiten des Bogenstückes A.

In der Praksis werden oft zwei Leitungen in kurzem Abstand voneinander angeordnet werden müssen. In jenen Fällen wird eine breitere Fussplatte mit zwei im Abstand voneinander angeordneten Aufsätzen verwendet werden, wobei über jeden Aufsatz ein Bogenstück angeordnet werden kann.

## Patentansprüche

1. Montagestütze zur Unterstützung und Führung einer Leitung (C) in einer Kurve, bestehend aus einem zum Befestigen auf einem Untergrund ausgelegten und mit einem sich über etwa einen Viertel-Kreisbogen erstreckenden Stützrinnenteil (12, 13) versehenen Fuss (B), gekennzeichnet durch ein hohl ausgeführtes Bogensstück (A) in der Gestalt von zwei parallel zueinander stehenden, etwa rechteckig-dreieckigen Stützwänden, die längs der schrägen Dreiecksseite durch eine am Stützrinnenteil (12, 13) komplementär geformte Führungswand (5) miteinander verbunden sind und die ferner auch längs einer der Rechtecksseiten durch eine Verbindungswand (1a) miteinander verbunden sind, welche an einem Ende in Zusammenarbeitung mit der Führungswand eine ringsherum durch eine Wand (3a) umschlossene Durchtrittsöffnung (3) für die Leitung (C) begrenzt, welches Bogenstück (4) lösbar, mit den freien Rechtecksseiten der beiden Stützwände bis zum Untergrund ragend, über den Fuss (B) passt und damit verbindbar ist.

2. Montagestütze nach Anspruch 1, dadurch gekennzeichnet, dass am anderen Leitung-Durchtrittsende (4) der Führungswand (5) eine mit ihren drehbaren Hälften (7a, 7b) normal offenstehende Klemmschelle des unter Einfluss des Druckes der biegenden Leitung (C) sich automatisch schliessenden Typs vorgesehen ist.

## Claims

1. A mounting support for supporting and guiding a conduit (C) in a curve, comprising a base (B) which is designed to be fixed on a support and which is provided with a support channel portion (12, 13) extending over approximately a quarter-circle arc, characterised by a hollow arcuate portion (A) in the form of two mutually parallel, approximately right-triangular support walls which are connected together along the inclined side of the triangle by a guide wall (5) which is complementarily formed on the support channel portion (12, 13), and which are also further connected together along one of the right-angled sides by a connecting wall (1a) which at one end in cooperation with the guide wall defines a through opening (3) for the conduit (C), which opening is enclosed therearound by a wall (3a), which arcuate portion (4) fits releasably over the base (B) and can be connected thereto, with the free right-angled sides of the two support walls projecting to the support.

2. A mounting support according to claim 1 characterised in that provided at the other conduit passage end (4) of the guide wall (5) is a clamping clip which is normally open with its rotatable halves (7a, 7b), the clip being of the type which closes automatically under the influence of the pressure of the bending conduit (C).

## Revendications

1. Support de montage destiné à soutenir et guider une conduite (C) dans une courbe, composé d'un pied (B) construit pour être fixé sur une infrastructure et muni d'une partie (12, 13) formant gouttière de soutien qui s'étend sur à peu près un quart de cercle, caractérisé par un élément courbe creux (A) ayant la configuration de deux parois de soutien à peu près en forme de triangle rectangle, disposées parallèlement entre elles, qui sont reliées l'une à l'autre, le long du côté oblique du triangle, par une paroi de guidage (5) façonnée à une forme complémentaire de la partie (12, 13) formant gouttière d'appui et qui, par ailleurs, sont encore réunies l'une à l'autre le long d'un des côtés de l'angle droit par une paroi de liaison (1a) qui, à une extrémité, délimite, en coopération avec la paroi de guidage, une ouverture (3) de passage de la conduite (C), entourée en boucle par une paroi (3a), lequel élément courbe (A) s'ajuste sur le pied (B), auquel il peut être relié, de façon démontable, en se prolongeant jusqu'à l'infrastructure par les côtés libres de l'angle droit des deux parois de soutien.

2. Support de montage selon la revendication 1, caractérisé en ce qu'il est prévu, à l'autre extrémité (4) de passage de la conduite de la paroi de guidage (5), un collier de serrage normalement ouvert par ses deux moitiés tournantes (7a, 7b), du type qui se ferme automatiquement sous l'influence de la pression de la conduite en cours de cintrage.
